**Europäisches Patentamt**

**European Patent Office**

**Office européen des brevets**

(19)

(11) Numéro de publication : **0 480 807 B1**

(12)

# FASCICULE DE BREVET EUROPEEN

(45) Date de publication du fascicule du brevet :
**20.09.95 Bulletin 95/38**

(51) Int. Cl.⁶ : **G06T 7/20**

(21) Numéro de dépôt : **91402655.4**

(22) Date de dépôt : **04.10.91**

(54) **Procédé et dispositif de recalage d'images utilisant une corrélation de phase avec pondération pour déterminer un décalage.**

(30) Priorité : **09.10.90 FR 9012446**

(43) Date de publication de la demande :
**15.04.92 Bulletin 92/16**

(45) Mention de la délivrance du brevet :
**20.09.95 Bulletin 95/38**

(84) Etats contractants désignés :
**DE GB IT NL**

(56) Documents cités :
**EP-A- 0 348 207**
**DE-A- 2 700 397**
**GB-A- 2 187 059**
**US-A- 4 826 285**

(73) Titulaire : **THOMSON-CSF**
**173, Boulevard Haussmann**
**F-75008 Paris (FR)**

(72) Inventeur : **Thoreau, Dominique**
**THOMSON-CSF,**
**SCPI,**
**Cédex 67**
**F-92045 Paris la Défense (FR)**
Inventeur : **Chevance, Christophe**
**THOMSON-CSF,**
**SCPI,**
**Cédex 67**
**F-92045 Paris la Défense (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

## Description

L'invention se rapporte au traitement d'images et a plus particulièrement pour objet un procédé et le dispositif correspondant de recalage d'images utilisant la corrélation de phase avec pondération pour déterminer un décalage.

Les procédés de recalage d'images connus sont de près ou de loin basés sur une analyse globale des contours apparaissant dans les images et visent à déterminer un décalage général entre contours pour remettre en coïncidence ces contours associés aux mêmes objets de façon à recaler une image courante par rapport à une image de référence et à détecter ainsi dans l'image recalée les modifications éventuelles intervenues entre les deux images. Cette technique s'applique notamment aux traitements d'images obtenues à partir de capteurs infrarouges dans des applications à la surveillance par exemple.

Les méthodes les plus classiques de recalage d'images effectuent des traitements de corrélation entre les deux images mais ce type de méthode fait apparaître sur certaines des fréquences des pics de corrélation qui sont fonction de l'énergie. On connaît donc une méthode plus perfectionnée dite "méthode par corrélation de phase" qui est une méthode de recalage utilisant des transformations de Fourier, un peu semblable aux méthodes de corrélation classiques à la grosse différence près que chaque composante est normalisée par rapport à son module dans le domaine transformé de Fourier. Ainsi une composante de fréquence quelconque a la même importance que les autres pour l'obtention des pics de corrélation, quelles que soient les amplitudes respectives de ces composantes de fréquences. Un tel procédé de recalage d'images dit par corrélation de phase est décrit notamment dans le brevet français n° 88 14675 au nom de la Demanderesse.

Ce type de procédé de recalage a des performances convenables lorsque les images ne sont pas bruitées. Par contre, ce procédé perd de son efficacité en présence d'images de faible définition et fortement bruitées (par exemple images infrarouge).

L'invention a donc pour objet un procédé de recalage d'images mettant en oeuvre une corrélation de phase, mais adapté pour rendre plus robuste la technique de recalage. Pour cela, l'invention effectue une pondération du spectre de corrélation de façon à accroître l'influence de la zone spectrale susceptible de contenir les contours tout en réduisant l'influence du bruit. Ainsi la méthode de recalage correspondante est applicable aux images très bruitées ou n'ayant que très peu de définition, sans toutefois mettre en oeuvre des opérations compliquées de pré-traitement avant la corrélation.

Selon l'invention, un procédé de recalage d'images selon lequel une transformation de Fourier discrète à deux dimensions $Fr(u,v)$ des valeurs de luminance $fr(x,y)$ d'une image de référence ayant été effectuée au préalable, le procédé comporte :
- une étape durant laquelle une transformée de Fourier discrète à deux dimensions $Fc(u,v)$ des valeurs de luminance $fc(x,y)$ de l'image courante est effectuée
- puis une étape de calcul de la matrice de corrélation $C(u,v)$ entre les transformées de Fourier de l'image de référence et de l'image courante, normalisées par rapport aux modules des coefficients obtenus
- puis une étape de calcul de la transformée de Fourier inverse de la matrice de corrélation faisant apparaître un pic de corrélation dans le domaine spatial $(x,y)$ caractéristique d'un déplacement entre éléments d'images analogues, est caractérisé en ce que, avant l'étape de calcul de la transformée de Fourier inverse, la matrice de corrélation est pondérée par une fonction de pondération $P(u,v)$ pour limiter l'influence du bruit et renforcer les valeurs moyennes dans lesquelles se trouvent la plupart des contours.

L'invention a également pour objet un dispositif de recalage d'images destiné à la mise en oeuvre de ce procédé.

L'invention sera mieux comprise et d'autres caractéristiques apparaîtront à l'aide de la description qui suit en référence aux figures annexées.
- La figure 1 est un schéma synoptique du procédé de recalage d'images selon l'invention ;
- Les figures 2a, 2b et 2c sont des schémas explicatifs de l'établissement de la fonction de pondération ;
- La figure 3 est un schéma représentant en trois dimensions la fonction de pondération appliquée à la fonction de corrélation dans le plan transformé ;
- La figure 4 est le même schéma à une échelle différente et pour 1/4 seulement du plan transformé.

Comme indiqué ci-dessus l'invention décrite ci-après met en oeuvre une version perfectionnée de la technique de corrélation de phase à deux dimensions, particulièrement destinée aux images de mauvaise qualité. Lorsqu'une méthode de recalage opère de façon globale sur les niveaux de gris, ce sont les contours même de faible amplitude qui permettent d'aboutir au déplacement vrai. Au moment où s'effectue l'opération de corrélation, il est intéressant d'une part de donner plus de poids aux zones de l'image qui sont supposées contenir ces contours, et d'autre part de réduire l'influence du bruit.

Dans la mesure où l'on procède par corrélation de phase, le spectre de la corrélation est facilement accessible. Cette approche est donc mise à profit dans la présente invention où une pondération du spectre de la corrélation est effectuée juste avant sa transformation de Fourier inverse. La description détaillée qui suit va permettre de mieux expliquer l'invention.

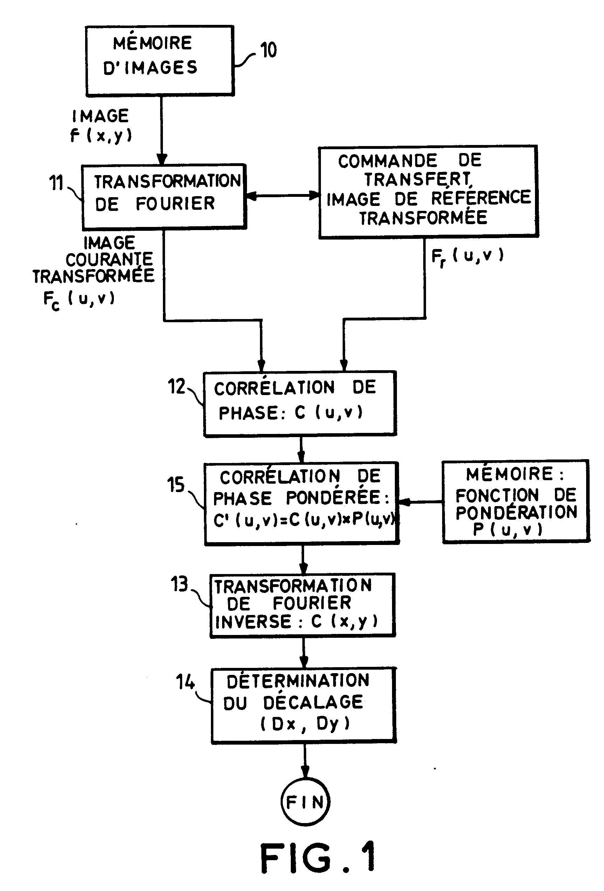

Si l'on se réfère à la figure 1 qui illustre le schéma synoptique de la corrélation avec la pondération du spectre de corrélation selon l'invention, il est possible dans un premier temps de repérer les étapes qui existaient déjà selon la méthode classique de recalage utilisant une corrélation de phase pour déterminer un décalage en translation après, avoir au préalable déterminé un angle de rotation. On pourra se référer à la demande de brevet français précitée n° 88 14675 pour une description détaillée de cette méthode incorporée à la présente description par référence. Ces étapes sont rappelées ci-après.

A partir d'une mémoire d'image 10 dans laquelle est mémorisée l'image dite courante, c'est-à-dire l'image à recaler par rapport à une image de référence, le procédé consiste dans une première étape 11 à appliquer la transformée de Fourier discrète à deux dimensions à l'image de référence d'une part et à l'image à recaler d'autre part. Ces images étant supposées constituées de NxM points, chaque coefficient transformé noté Fr(u,v) pour l'image de référence est égal à :

$$\mathrm{Fr(u,v)=1/N.1/M} \sum_{x=0}^{M-1} \sum_{y=0}^{N-1} \mathrm{fr(x,y).Exp(-2\P j.(xu/N + yv/M))}$$

avec u = 0, ..., N-1
et v = 0, ..., M-1
et où fr(x,y) est la luminance du pixel de coordonnées (x,y) de l'image de référence.

De même pour l'image courante, la transformée de Fourier de cette image courante notée Fc(u,v) est égale à :

$$\mathrm{Fc(u,v)} = \mathrm{1/N.1/M} \sum_{x=0}^{M-1} \sum_{y=0}^{N-1} \mathrm{fc(x,y).Exp(-2\P j.(xu/N + yv/M))}$$

où fc(x,y) est la luminance du pixel de coordonnées (x,y) de l'image courante.

A partir de ces deux transformées de Fourier, une étape 12 consiste à calculer l'intercorrélation entre ces deux fonctions de la manière suivante :

$$\mathrm{C(u,v)} = \mathrm{(Fr(u,v).Fc^*(u,v))/|Fr(u,v).Fc(u,v)|}.$$

où : Fc*(u,v) est le complexe conjugué de Fc(u,v).

Comme indiqué ci-dessus, cette fonction de corrélation dite "de phase" est normalisée au niveau de ses composantes par rapport aux modules de ces dernières.

L'étape suivante 13 consiste alors à calculer la transformée de Fourier inverse à deux dimensions de la fonction d'intercorrélation C(u,v) telle que :

$$\mathrm{c(x,y) = F^{-1}(C(u,v))}$$

pour revenir au domaine spatial (x,y), c(x,y) étant le plan de corrélation contenant le ou les pics caractéristiques des décalages entre les deux images. La dernière étape 14 du procédé classique de corrélation consiste à estimer un vecteur de décalage de composantes dx et dy entre l'image de référence et l'image courante dans le plan de corrélation c(x,y). Il est possible de noter que l'application d'une fenêtre de Hamming sur les deux images, image de référence et image courante, avant de calculer les transformations de Fourier discrètes peut avantageusement être effectuée.

Les étapes décrites ci-dessus sont reproduites dans le procédé selon l'invention mais à partir de la fonction d'intercorrélation C(u,v) des transformées de Fourier discrètes à deux dimensions de l'image de référence, Fr(u,v), et de l'image courante, Fc(u,v), une pondération de l'intercorrélation est effectuée dans une étape 15 par une fonction de pondération P(u,v) à deux dimensions appliquée à l'intercorrélation C(u,v) de la manière suivante :

$$\mathrm{C'(u,v) = C(u,v).P(u,v)}$$

L'intercorrélation dans le domaine spatial est alors calculée par la transformée de Fourier inverse à deux dimensions de l'intercorrélation pondérée dans le domaine de Fourier C'(u,v), le vecteur de décalage étant extrait de l'intercorrélation dans le domaine spatial de la même manière que dans l'art connu.

La fonction de pondération appliquée à l'intercorrélation est optimisée pour obtenir simultanément une réduction de l'influence du bruit et un renforcement des composantes à fréquences moyennes qui sont celles dans lesquelles apparaissent la plupart des contours. Pour cela, à titre d'exemple la pondération peut être calculée de la manière suivante :

$P(u,v)$ est construite à partir de fonctions de transfert de type filtres de Butterworth caractérisant respectivement un filtre passe-bas et un filtre passe-haut, de pseudo-fréquences de coupure convenables, une valeur résiduelle pour les basses fréquences étant conservée sous la forme d'un coefficient constant ajouté à la caractéristique du filtre passe-haut.

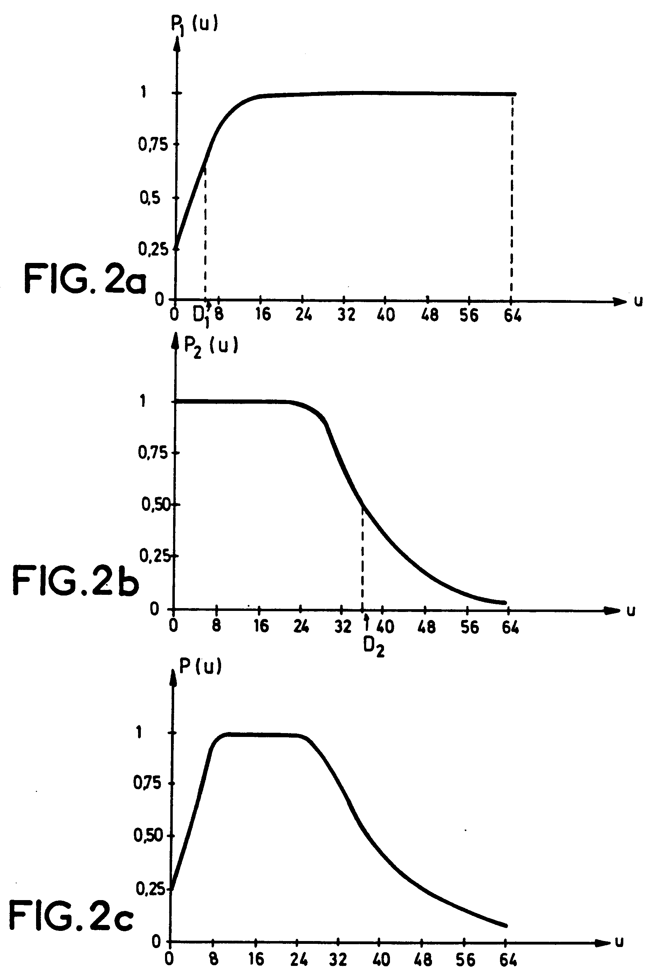

Les courbes représentées sur les figures 2a, 2b et 2c représentent respectivement, pour une dimension, les formes des courbes de réponse des filtres avec les pseudo-fréquences de coupure représentées par les coefficients $D_1$ et $D_2$ et la fonction de pondération résultant du produit de ces deux caractéristiques toujours sur les mêmes bases.

Sur la figure 2a a été représenté la courbe $P_1(u)$ du filtre passe-haut avec une pseudo-fréquence de coupure égale à $D_1$ et exprimée dans le plan $(u,v)$ à deux dimensions par

$$P_1(u,v) = 0,25 + 0,75/\sqrt{(1 + 0,414.D_1/D(u,v))^{2N1}}$$

où $D(u,v) = \sqrt{u^2 + v^2}$ et où $N_1$ est un nombre.

A titre d'exemple $D_1 = 5$ et $N_1 = 2$.

Sur la figure 2b a été représentée la courbe $P_2(u)$ du filtre passe-bas avec une pseudo-fréquence de coupure égale à $D_2$ et exprimée dans le plan $(u,v)$ à deux dimensions par :

$$P_2(u,v) = 1/\sqrt{(+ 0,414.D(u,v)/D_2)^{2N2}}$$

où $N_2$ est un nombre.

A titre d'exemple $D_2 = 35$ et $N_2 = 5$.

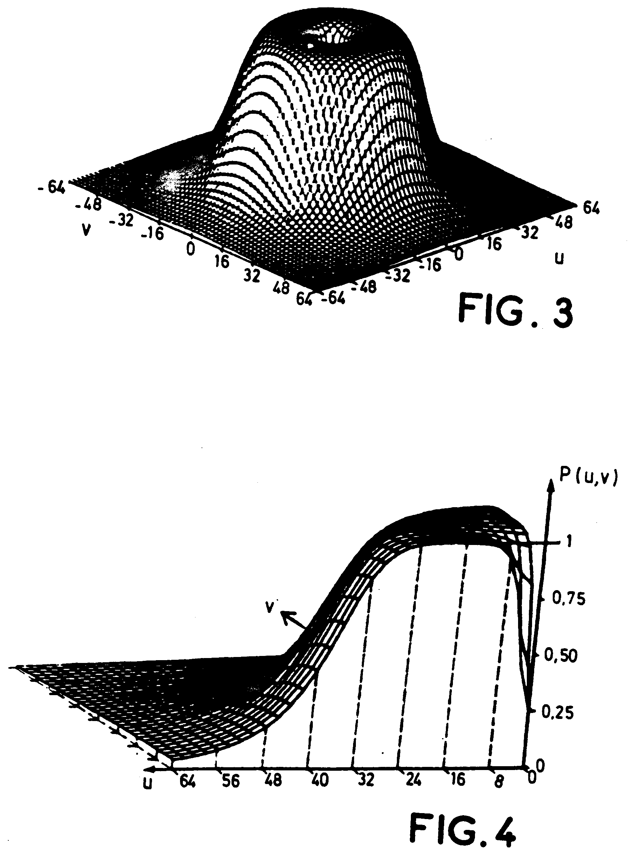

La figure 3 illustre les coefficients de pondération dans le plan transformé pour une transformée de taille 128x128 points, la figure 4 illustrant la même fonction de pondération suivant 1/4 du plan transformé. Dans l'exemple illustré la zone spectrale permettant de privilégier la corrélation est comprise entre $D_1 = 5$ et $D_2 = 35$ ; mais d'autres valeurs peuvent être choisies dépendant du type de capteurs d'où sont issues les images, voire du contenu de l'image elle-même. Cette précision est donnée car il faut veiller lors du traitement à ne pas supprimer des zones spectrales qui sont susceptibles de contenir l'information nécessaire à l'estimation du ou des vecteurs de décalage.

Il résulte des explications indiquées ci-dessus que la fonction de pondération se présente pour le traitement sous la forme d'un tableau de nombres réels utilisés comme coefficients de la fonction de corrélation appliqués aux différents points du plan de corrélation en deux dimensions, ce tableau de nombres réels étant tel qu'en présence de transformées de tailles NxM, la taille de la mémoire de stockage des coefficients pourra être de :
- $N.(M/2+1)$ en tenant compte de la symétrie hermitienne ;
- $(N/2+1).(M/2+1)$ si la fonction d'intercorrélation est de plus de symétrie circulaire ;
- $(N/2+1).(M/4+1)$ avec une fonction de pondération de symétrie circulaire.

Il apparaît clairement de la description ci-dessus que la fonction de pondération appliquée à la fonction de l'intercorrélation à deux dimensions décrite ci-dessus n'est qu'un exemple de réalisation et peut être adaptée, au contenu des images à traiter notamment.

Le dispositif de mise en oeuvre du procédé de recalage d'image selon l'invention est analogue à celui qui a été décrit dans la demande de brevet français n° 88 14675 au nom de la Demanderesse à ceci près qu'il comporte en outre une mémoire de stockage des coefficients de pondération telle que décrite ci-dessus.

## Revendications

1. Procédé de recalage d'images selon lequel une transformation de Fourier discrète à deux dimensions $Fr(u,v)$ des valeurs de luminance $fr(x,y)$ d'une image de référence ayant été effectuée au préalable, le procédé comporte :
   - une étape (11) durant laquelle une transformée de Fourier discrète à deux dimensions $Fc(u,v)$ des valeurs de luminance $fc(x,y)$ de l'image courante est effectuée
   - puis une étape (12) de calcul de la matrice de corrélation $C(u,v)$ entre les transformées de Fourier de l'image de référence et de l'image courante normalisée par rapport aux modules des coefficients obtenus
   - puis une étape (13) de calcul de la transformée de Fourier inverse de la matrice de corrélation faisant apparaître un pic de corrélation dans le domaine spatial (x,y) caractéristique d'un déplacement entre éléments d'images analogues,

caractérisé en ce que, avant l'étape de calcul de la transformée de Fourier inverse, la matrice de corrélation est pondérée (15) par une fonction de pondération P(u,v) pour limiter l'influence du bruit et renforcer les valeurs moyennes dans lesquelles se trouvent l'information de structure.

2. Procédé selon la revendication 1, caractérisé en ce que la fonction de pondération dans le plan transformé P(u,v) est telle qu'elle réduit l'influence des composantes de la matrice de corrélation associées à des nombres de points faibles, inférieurs à une première valeur $D_1$ d'une manière analogue à un filtrage passe-haut, et réduit très fortement l'influence des composantes de la matrice de corrélation associées à des nombres de points élevés, supérieur à une seconde valeur $D_2$, d'une manière analogue à une filtrage passe-bas, les composantes de la matrice associées à des nombres de points compris entre les deux paramètres $D_1$ et $D_2$ étant privilégiées.

3. Procédé selon la revendication 2, caractérisé en ce que les paramètres de la fonction de pondération sont déterminés à partir des caractéristiques du capteur dont sont issues les images à traiter.

4. Dispositif de recalage d'images destiné à la mise en oeuvre du procédé selon l'une des revendications 1 à 3, comportant :
   - des moyens (11) pour effectuer une transformée de Fourier discrète à deux dimensions Fc(u,v) des valeurs de luminance fc(x,y) de l'image courante,
   - des moyens (12) pour calculer la matrice de corrélation C(u,v) entre les transformées de Fourier de l'image de référence et de l'image courante normalisée par rapport aux modules des coefficients obtenus et
   - des moyens (13) pour calculer la transformée de Fourier inverse de la matrice de corrélation faisant apparaître un pic de corrélation dans le domaine spatial (x,y) caractéristique d'un déplacement entre éléments d'images analogues

   et caractérisé en ce qu'il comporte une mémoire PROM de stockage des coefficients de pondération formant la fonction (15) de pondération P(u,v) de la matrice de corrélation C(u,v).

5. Dispositif selon la revendication 4, caractérisé en ce que, pour des images comportant N.M points, la taille de la matrice est limitée à N.(M/2+1), en tenant compte de la symétrie hermitienne.

6. Dispositif selon la revendication 5, caractérisé en ce que la taille de la matrice est limitée à (N/2+1).(M/2+1) en tenant compte de la symétrie hermitienne et lorsque la fonction de pondération est de symétrie circulaire.

7. Dispositif selon la revendication 6, caractérisé en ce que la taille de la matrice est limitée à (N/2+1).(M/4+1) en tenant compte de la symétrie hermitienne, lorsque la fonction de pondération est de symétrie circulaire.

**Patentansprüche**

1. Verfahren zur Bildrückstellung, gemäß dem im voraus eine zweidimensionale diskrete Fourier-Transformation Fr(u,v) der Luminanzwerte fr(x,y) eines Referenzbildes ausgeführt worden ist, wobei das Verfahren enthält:
   - einen Schritt (11), in dem eine zweidimensionale diskrete Fourier-Transformation Fc(u,v) der Luminanzwerte fc(x,y) des momentanen Bildes ausgeführt wird,
   - dann einen Schritt (12) der Berechnung der Korrelationsmatrix C(u,v) zwischen den Fourier-Transformationen des Referenzbildes und des momentanen Bildes, die hinsichtlich der Beträge der erhaltenen Koeffizienten normiert ist,
   - dann einen Schritt (13) der Berechnung der inversen Fourier-Transformation der Korrelationsmatrix, die in dem charakteristischen räumlichen Bereich (x,y) einer Verschiebung zwischen analogen Bildelementen eine Korrelationsspitze zeigt,

   dadurch gekennzeichnet, daß vor dem Schritt der Berechnung der inversen Fourier-Transformation die Korrelationsmatrix durch eine Gewichtungsfunktion P(u,v) gewichtet (15) wird, um den Einfluß des Rauschens zu begrenzen und die Mittelwerte, in denen sich die Strukturinformation befindet, hervorzu-

**EP 0 480 807 B1**

heben.

2. Verfahren nach Anspruch 1, dadurch gekennzeichnet, daß die Gewichtungsfunktion in der transformierten Ebene P(u,v) so beschaffen ist, daß sie auf eine zu einer Hochpaßfilterung analoge Weise den Einfluß derjenigen Komponenten der Korrelationsmatrix reduziert, die zu Zahlen von niedrigen Punkten, die unter einem ersten Wert $D_1$ liegen, gehören, und daß sie auf eine zu einer Tiefpaßfilterung analoge Weise den Einfluß derjenigen Komponenten der Korrelationsmatrix sehr stark reduziert, die zu Zahlen von hohen Punkten, die oberhalb eines zweiten Wertes $D_2$ liegen, gehören, wobei diejenigen Komponenten der Matrix, die zu Zahlen von Punkten gehören, die zwischen den zwei Parametern $D_1$ und $D_2$ liegen, bevorzugt werden.

3. Verfahren nach Anspruch 2, dadurch gekennzeichnet, daß die Parameter der Gewichtungsfunktion ausgehend von den Eigenschaften des Aufnehmers bestimmt werden, von dem die zu verarbeitenden Bilder ausgegeben werden.

4. Vorrichtung zur Bildrückstellung, die dazu vorgesehen ist, das Verfahren gemäß einem der Ansprüche 1 bis 3 auszuführen, mit:
   - Mitteln (11), die eine zweidimensionale diskrete Fourier-Transformation Fc(u,v) der Luminanzwerte fc(x,y) des momentanen Bildes ausführen,
   - Mitteln (12), die die Korrelationsmatrix C(u,v) zwischen den Fourier-Transformationen des Referenzbildes und des momentanen Bildes berechnen, wobei die Matrix hinsichtlich der Beträge der erhaltenen Koeffizienten normiert ist, und
   - Mitteln (13), die die inverse Fourier-Transformation der Korrelationsmatrix berechnen, die im charakteristischen räumlichen Bereich (x,y) einer Verschiebung zwischen analogen Bildelementen eine Korrelationsspitze zeigt,
      und dadurch gekennzeichnet, daß sie einen PROM-Speicher zum Speichern von Gewichtungskoeffizienten enthält, die die Funktion (15) der Gewichtung P(u,v) der Korrelationsmatrix C(u,v) bilden.

5. Vorrichtung nach Anspruch 4, dadurch gekennzeichnet, daß für Bilder mit NxM Punkten unter Berücksichtigung der hermitischen Symmetrie die Größe der Matrix auf $N \times (M/2 + 1)$ begrenzt ist.

6. Vorrichtung nach Anspruch 5, dadurch gekennzeichnet, daß unter Berücksichtigung der hermitischen Symmetrie die Größe der Matrix auf $(N/2 + 1) \times (M/2 + 1)$ begrenzt ist, wenn die Gewichtungsfunktion Kreissymmetrie besitzt.

7. Vorrichtung nach Anspruch 6, dadurch gekennzeichnet, daß unter Berücksichtigung der hermitischen Symmetrie die Größe der Matrix auf $(N/2 + 1) \times (M/4 + 1)$ begrenzt ist, wenn die Gewichtungsfunktion Kreissymmetrie besitzt.

## Claims

1. Method for the resetting of images in which a 2-D discrete Fourier transformation Fr(u,v) of the luminance values fr(x,y) of a reference image having been performed beforehand, said method comprises:
   - a step (11) in which a 2-D discrete Fourier transform Fc(u,v) of the luminance values fc(x,y) of the current image is carried out,
   - then a step (12) in which the correlation matrix C(u,v) between the Fourier transforms of the reference image and of the current image standardized with respect to the moduli of the coefficients obtained is computed,
   - then a step (13) in which the inverse Fourier transform of the correlation matrix showing up a correlation peak in the spatial domain (x,y) characteristic of a shift between analogous image elements, is computed, characterized in that, before the step in which the inverse Fourier transform is computed, the correlation matrix is weighted (15) by a weighting function P(u,v) in order to limit the influence of noise and to amplify the mean values in which the information on structure is found.

2. Method according to Claim 1, characterized in that the weighting function in the transformed plane P(u,v) is such that it reduces the influence of the components of the correlation matrix which are associated with small numbers of dots, smaller than a first value $D_1$, in a manner similar to a high-pass filtering, and very

6

greatly reduces the influence of those components of the correlation matrix which are associated with large numbers of dots, greater than a second value $D_2$, in a manner similar to a low-pass filtering, the components of the matrix which are associated with numbers of dots between the two parameters $D_1$ and $D_2$ being given greater importance.

3. Method according to Claim 2, characterized in that the parameters of the weighting function are determined on the basis of the characteristics of the sensor from which the images to be processed have come.

4. Image resetting device designed for the implementation of the method according to any of Claims 1 to 3, comprising:
   - means (11) for carrying out a 2D discrete Fourier transform Fc(u,v) of the luminance values fc(x,y) of the current image,
   - means (12) for computing the correlation matrix C(u,v) between the Fourier transforms of the reference image and of the current image standardized with respect to the moduli of the coefficients obtained and
   - means (13) for computing the inverse Fourier transform of the correlation matrix showing up a correlation peak in the spatial domain (x,y) characteristic of a shift between analogous image elements, and characterized in that it includes a PROM memory for storing the weighting coefficients forming the weighting function P(u,v) (15) of the correlation matrix C(u,v).

5. Device according to Claim 4, characterized in that, for images having N.M dots, the size of the matrix is limited to N.(M/2+1), taking into account the hermitian symmetry.

6. Device according to Claim 5, characterized in that the size of the matrix is limited to (N/2+1).(M/2+1), taking into account the hermitian symmetry and when the weighting function has circular symmetry.

7. Device according to Claim 6, characterized in that the size of the matrix is limited to (N/2+1).(M/4+1), taking into account the hermitian symmetry, when the weighting function has circular symmetry.

FIG.1

FIG.2a

FIG.2b

FIG.2c

FIG . 3

FIG.4